# FASCICULE DE BREVET EUROPEEN

(11) **EP 4 033 898 B1**
(45) Date de publication et mention de la délivrance du brevet: **19.03.2025**
(21) Numéro de dépôt: 20781054.0
(22) Date de dépôt: 14.09.2020
(51) Int. Cl.: A01N 1/122

(54) **SOLUTION DE PRÉSERVATION ET/OU DE RINÇAGE D'ORGANE Á TRANSPLANTER**
SPÜL- UND KONSERVIERUNGSLÖSUNG EINES ZU TRANSPLANTIERENDEN ORGANS
PRESERVATION AND/OR RINSING SOLUTION FOR ORGANS TO BE TRANSPLANTED

(30) Priorité: 27.09.2019 FR 1910747
(43) Date de publication de la demande: 03.08.2022
(73) Titulaire: Institut Georges Lopez, 69380 Lissieu (FR)
(72) Inventeur: LOPEZ, Georges Antoine, 69480 Anse (FR); LOPEZ, Alexandre, 69160 Tassin La Demi Lune (FR)
(74) Mandataire: Cabinet Laurent & Charras
(86) Numéro de dépôt international: PCT/FR2020/051589
(87) Numéro de publication internationale: WO 2021/058892

(56) Documents cités:
- WO-A1-00/69259
- WO-A2-2012/150392

## Description

### DOMAINE DE L'INVENTION

La présente invention concerne une solution aqueuse de préservation et/ou de rinçage d'un organe à transplanter et son utilisation pour la préservation statique, la préservation dynamique et/ou le rinçage d'un organe à transplanter.

### ETAT DE LA TECHNIQUE ANTERIEURE

La transplantation d'organe est le dernier recours en cas de défaillance d'un organe vital qui est alors remplacé par un organe sain appelé greffon.

Les organes greffés proviennent généralement de sujet en état de mort encéphalique (ou mort cérébrale), dont la circulation et la respiration sont maintenues artificiellement par des procédures de réanimation. En France, la loi indique que tous les individus sont présumés donneurs, c'est-à-dire donneurs d'organes et de tissus, sauf si un individu a exprimé de son vivant son refus d'être prélevé. Un renoncement au prélèvement d'organes peut également être décidé par l'équipe médicale en raison d'antécédents pathologiques du donneur (tumeurs, maladies infectieuses ou autres) ou d'obstacles médicaux. En parallèle, de nombreuses greffes sont réalisées à partir de donneur vivant, par exemple, les greffes rénales.

Après avoir été prélevés chez le donneur, les organes sont soumis à une période inévitable d'arrêt de la circulation du sang ou ischémie (chaude puis froide) pour assurer leur préservation avant d'être attribués à un receveur compatible puis transplantés.

Dans ce contexte, tous les organes sont exposés aux lésions du syndrome ischémie-reperfusion. Ce syndrome regroupe un ensemble de processus physiopathologiques responsables de lésions au niveau du greffon, notamment une altération des populations cellulaires.

L'ischémie-reperfusion est un des principaux facteurs à l'origine d'une atteinte des organes avant transplantation, d'une reprise différée et/ou altérée de la fonction de l'organe, d'un risque accru de rejet ou encore d'une réduction de la survie des greffons à long terme. Il en résulte une atteinte trop importante des organes qui ne peuvent plus être transplantés ou le besoin de recourir à une nouvelle greffe en raison d'une défaillance fonctionnelle du greffon à plus ou moins long terme.

En dépit des progrès constants dans le domaine du don d'organe, la liste des personnes en attente d'une greffe d'organe s'allonge, notamment en raison de la réussite de l'activité de transplantation, de ses bénéfices pour les patients et du vieillissement de la population. A ce jour, plus de 20 000 personnes sont en attente d'une greffe d'organe. En 5 ans, ce nombre a augmenté de 17% (Agence de la biomédecine).

La carence d'organe disponible en vue d'une transplantation, constitue actuellement un des problèmes majeurs de la santé publique.

Ce constat amène à rechercher d'autres greffons disponibles, voire de nouvelles possibilités thérapeutiques. A titre d'exemple, la xéno-transplantation (organes prélevés chez les animaux) et la thérapie cellulaire sont envisageables mais elles ne seront éventuellement disponibles que dans plusieurs années.

D'autres possibilités plus accessibles et plus rapides à mettre en place consistent à améliorer/adapter la préservation des greffons pour :
- diminuer le nombre de perte de greffons ; et
- pouvoir utiliser des greffons dits « marginaux » généralement trop sensibles, qui se détériorent plus vite que les greffons « sains », au cours de la procédure de transplantation.

A titre d'exemple, pour la transplantation hépatique, une solution pour faire face à la pénurie d'organes serait d'utiliser des greffons « marginaux » comme les foies atteints de stéatose.

La stéatose hépatique est une pathologie du foie associée à une surcharge de lipides, essentiellement les triglycérides, dans le cytoplasme des hépatocytes. La prévalence de cette pathologie est de 20% à 30% dans les pays développés. Il s'agit donc d'une pathologie fréquente, dont la prévalence tend à augmenter avec l'accroissement des cas d'obésité et de diabète.

Deux types de stéatose hépatique sont observés, la stéatose micro-vacuolaire à l'étiologie variée et se caractérise par la présence de plusieurs petites vacuoles lipidiques dans le cytoplasme et dont la présence n'induit pas de déplacement du noyau des hépatocytes. Le second type de stéatose, le plus sévère, est la stéatose macro-vacuolaire dont l'une des étiologies est une consommation excessive d'alcool. Ce type de stéatose se caractérise par une grande vacuole lipidique unique qui déplace le noyau des hépatocytes.

Les foies stéatosiques sont plus sensibles à la préservation statique en hypothermie. En effet, dans ce contexte pathologique, la disponibilité en oxygène est réduite en raison d'anomalie morphologiques des hépatocytes.

Les critères de transplantation ou non des greffons « marginaux » ne sont pas clairs et chaque centre de transplantation possède ses propres paramètres d'évaluation pour choisir de prélever et ensuite d'attribuer ou non un greffon à un receveur.

Les solutions de préservation ou les solutions de rinçage sont couramment utilisées pour laver le greffon du sang résiduel, refroidir l'organe ou le préserver, notamment au cours du transport.

Au moment où l'organe est retiré du corps du donneur, il est coupé de toute vascularisation et est soumis à un phénomène d'ischémie chaude. Les cellules se nécrosent rapidement ce qui altère la viabilité du greffon. Pour limiter ce phénomène, l'organe est rapidement placé dans une solution de préservation à +4°C. Il s'agit de la préservation hypothermique statique qui est la méthode de préservation la plus répandue. L'organe peut être maintenu dans cette solution jusqu'au moment de la greffe.

Dans ce contexte, le rôle du liquide de préservation est de diminuer l'impact des lésions d'ischémie-reperfusion (lésions cellulaires et réaction allo-immune) mais également d'assurer une irrigation du greffon pour une élimination quasi-complète du sang, de distribuer de façon homogène l'hypothermie et de limiter les effets délétères engendrés par l'ischémie froide.

Cependant cette méthode assure la préservation des organes pour une période limitée, par exemple moins de 24 heures pour le rein, 8 à 12 heures pour le foie ou encore 4 à 6 heures pour le cœur.

Parmi les principales solutions utilisées on retrouve :
- Les solutions pour lesquelles la concentration en potassium (K⁺) est supérieure à celle en sodium (Na⁺), dites solutions intracellulaires. A titre d'exemple, on peut citer la solution BELZER UW^{®} (UW^{®}) pour la préservation rénale, hépatique et pancréatique, commercialisée par BRIDGE TO LIFE ;
- Les solutions pour lesquelles la concentration en potassium (K⁺) est inférieure à celle en sodium (Na⁺), dites solutions extracellulaires. A titre d'exemple on peut citer le liquide SAINT THOMAS^{®} pour la préservation de greffon cardiaque, commercialisé par LES LABORATOIRES AGUETTANT.

Le document WO 00/69259 décrit une solution de préservation de type extracellulaire qui utilise comme agent oncotique un polyéthylène glycol de 35000 Daltons (PEG 35) à une concentration de 0,029 mM soit 1g.L⁻¹. Cette solution de préservation est mise en œuvre pour la préservation hypothermique statique et a montré des propriétés dans la protection des cellules endothéliales ainsi que des propriétés antioxydantes pour la préservation rénale et hépatique avant transplantation.

Une première possibilité pour la préservation et le transport de greffon consiste à immerger l'organe à transplanter dans la solution de préservation maintenue entre +2 et +8°C (préservation hypothermique statique) comme mentionné ci-avant. Il n'y a pas de circulation de la solution dans le greffon.

Une alternative consiste à perfuser le greffon de façon continue jusqu'à son implantation chez le receveur (préservation dynamique) en condition d'hypothermie.

Le principe de la préservation dynamique nécessite l'utilisation de machine de perfusion (ou MP) et est basé sur une circulation contrôlée continue ou pulsatile d'un perfusat (ou solution).

A ce jour, il existe deux types de MP: machine à écoulement continu ou à écoulement pulsatile. Cet écoulement apporte un supplément en nutriments assortis plus ou moins d'oxygène tandis que les déchets toxiques et les radicaux libres produits peuvent être éliminés.

A titre d'exemple la machine Lifeport^{®}, commercialisée par ORGAN RECOVERY SYSTEM, est une machine utilisée pour la perfusion hypothermique des greffons rénaux. Une des solutions utilisées avec cette machine est la solution Belzer-MPS^{®}, dérivée de la solution UW^{®}.

La machine RM3^{®} est une MP pulsatile commercialisée par la société IGL et qui permet le transport d'un ou deux reins. Elle dispose d'un système de pompage régulé qui mime les phénomènes de systole et de diastole observés au niveau du cœur.

La solution de préservation utilisée dans une machine de perfusion doit être choisie judicieusement, notamment par rapport à sa viscosité afin d'assurer une perfusion efficace et continue du greffon.

A ce jour, il est nécessaire de nettoyer l'organe au moyen d'un liquide de rinçage par exemple du type de celui décrit dans le document du Demandeur WO 2012/150392. Ce document décrit une solution de rinçage extracellulaire comprenant une forte proportion de PEG et une quantité de K⁺ inférieure à 10 mmol.L⁻¹. L'organe est ensuite conservé en choisissant une autre solution qui correspond à une solution de préservation adaptée au système de préservation sélectionné (statique ou dynamique). En outre, il ressort des éléments développés précédemment que la solution de préservation doit également être choisie en fonction de l'organe à transplanter.

En d'autres termes, il n'y a pas de solution adaptée, notamment en termes de formulation et de viscosité, qui permet de l'utiliser pour le rinçage du greffon mais aussi pour la préservation du greffon que ce soit en système statique ou en système dynamique.

Il subsiste donc un besoin évident de mettre au point une solution universelle apte à assurer le rinçage d'un greffon de la même façon que sa préservation efficace *via* la mise en œuvre des méthodes de préservation statique ou dynamique. En outre, cette solution devrait permettre de rincer et/ou conserver des greffons « marginaux ».

### EXPOSE DE L'INVENTION

Le Demandeur a mis au point une nouvelle génération de solution pour la préservation et/ou le rinçage d'organe à transplanter qui permet de résoudre les problèmes de l'art antérieur évoqués précédemment.

En particulier, la solution selon l'invention assure un meilleur rinçage et/ou préservation du greffon permettant de diminuer les altérations cellulaires de même que les atteintes de la fonction de l'organe. La solution selon l'invention est également efficace pour le rinçage et/ou la préservation des greffons « marginaux ». Il en résulte une augmentation du nombre de greffons candidats à une transplantation, un rétablissement fonctionnel du greffon plus rapide et plus efficace et une amélioration de la qualité des organes à transplanter.

Contre toute attente, la présence de PEG 35 à une concentration supérieure à 1g.L⁻¹ au sein d'une solution de composition spécifique en ions sodium (Na⁺) et (K⁺), n'altère pas sa viscosité initiale et en fait une solution utilisable pour la conservation statique de même que dans les machines à perfusion (MP).

Selon un premier aspect, l'invention concerne une solution aqueuse de préservation et/ou de rinçage d'organe à transplanter comprenant :
- des ions sodium (Na⁺) à une concentration comprise entre 30 et 150 mmol.L⁻¹ ;
- des ions potassium (K⁺) à une concentration comprise entre 10 et 40 mmol.L⁻¹ ;
- du polyéthylène glycol de masse molaire de 35000 g.mol⁻¹ (PEG 35000) à une concentration massique comprise entre 2 et 5 g.L⁻¹.

Ainsi, selon l'invention le polyéthylène glycol a une concentration molaire comprise entre 0,057 et 0,143 mmol.L⁻¹.

An sens de l'invention, par « solution », on désigne un mélange homogène, constitué d'une seule phase (solvant), contenant au moins une substance (soluté) dissoute dans le solvant.

Au sens de l'invention, par « préservation », on désigne le maintien *ex vivo* de la viabilité des cellules de l'organe à transplanter ainsi que de ses fonctions physiologiques. Au sens de l'invention, le terme « conservation » peut être utilisé pour désigner le même mécanisme.

Au sens de l'invention, par « rinçage », on désigne l'action de nettoyer l'organe à transplanter après son prélèvement pour éliminer le sang résiduel, éliminer les produits de dégradation du métabolisme cellulaire ou catabolites (par exemple, l'endothéline) libérés après l'ischémie chaude ou encore éliminer l'accumulation de fortes quantités de potassium susceptibles de provoquer des troubles du rythme cardiaque chez le receveur.

Au sens de l'invention, les termes « organe à transplanter » ou « greffon » désignent le même objet, à savoir, un organe ou un tissu à transplanter d'un donneur à un receveur par une intervention chirurgicale dans le but de remplacer un organe défaillant.

Au sens de l'invention, par « transplantation », on désigne le transfert d'un organe entier d'un donneur, impliquant le rétablissement de la continuité vasculaire afférente et efférente de cet organe avec l'appareil circulatoire du receveur. Dans un sens élargi, on pourra employer le terme de « greffe ».

Selon un mode de réalisation particulier, la solution est du type extracellulaire en ce qu'elle contient une concentration plus importante de Na⁺ que de K⁺.

Selon un mode de réalisation particulier, la solution selon l'invention comprend en outre du glutathion, comme agent antioxydant, à une concentration avantageusement comprise entre 1 et 11 mmol.L⁻¹, par exemple 9 mmol.L⁻¹.

Le glutathion est une enzyme qui participe à l'élimination des radicaux libres (ou ROS) permettant de réduire le phénomène de stress oxydatif à l'origine d'une détérioration de l'organe à transplanter.

Selon un mode de réalisation préféré, la solution selon l'invention comprend en outre des ions zinc (Zn²⁺) à une concentration avantageusement comprise entre 0,08 mmol.L⁻¹ et 0,210 mmol.L⁻¹, de préférence entre 0,08 mmol.L⁻¹ et 0,170 mmol.L⁻¹, encore plus avantageusement entre 0,08 mmol.L⁻¹ et 0,1 mmol.L⁻¹, par exemple 0,091 mmol.L⁻¹.

Selon un autre mode de réalisation particulier, la solution selon l'invention comprend en outre des ions zinc (Zn²⁺) à une concentration avantageusement comprise entre 0,170 et 0,210 mmol.L⁻¹, par exemple 0,191 mmol.L⁻¹.

Le zinc joue plusieurs rôles dans le métabolisme cellulaire, notamment il s'agit d'un cofacteur d'activation de la forme endothéliale de l'oxyde nitrique synthase (ou eNOS ou NOS3). Le zinc participe donc indirectement à l'augmentation de la concentration en oxyde nitrique dans le greffon.

Avantageusement, les ions Zn²⁺ sont apportés par un sel de zinc, par exemple le gluconate de zinc ou le chlorure de zinc, de préférence le chlorure de zinc.

Selon un mode de réalisation particulier, la solution selon l'invention comprend en outre des ions nitrites (NO²⁻) à une concentration avantageusement comprise entre 5 et 100 nmol.L⁻¹, par exemple 50 nmol.L⁻¹.

Le nitrite est la forme soluble du monoxyde d'azote ou oxyde nitrique (NO) qui induit notamment une vasodilatation de l'endothélium des vaisseaux sanguin à l'origine d'une augmentation du débit sanguin.

Avantageusement, les ions NO²⁻ sont apportés par un sel de nitrite, par exemple le nitrite de sodium (NaNO₂), le nitrite de calcium (Ca(NO₂)₂ ou le nitrite de potassium (KNO₂) de préférence le nitrite de sodium (NaNO₂).

Selon un mode de réalisation particulier, le pH de la solution de préservation et/ou de rinçage selon l'invention est avantageusement compris entre 7,2 et 7,6, par exemple égal à 7,4.

Selon un mode de réalisation particulier, l'osmolarité de la solution est avantageusement comprise entre 250 et 380 mosm.L⁻¹, par exemple égale à 290 mosm.L⁻¹.

Selon un mode de réalisation particulier, la solution selon l'invention comprend, en outre, au moins un anion imperméant, au moins un sucre, au moins un agent stabilisant de membrane cellulaire, une solution tampon et/ou au moins une source d'énergie.

Selon un mode de réalisation particulier, la solution selon l'invention comprend, en outre :
- du raffinose à une concentration avantageusement comprise entre 25 et 35 mmol.L⁻¹, par exemple 30 mmol.L⁻¹; et de l'allopurinol à une concentration avantageusement comprise entre 0,5 et 1,5 mmol.L⁻¹, par exemple 1 mmol.L⁻¹; ou alternativement
- du mannitol à une concentration avantageusement comprise entre 40 et 80 mmol.L⁻¹, par exemple 60 mmol.L⁻¹.

Selon un mode de réalisation particulier, la solution selon l'invention comprend, en outre :
- du raffinose à une concentration avantageusement comprise entre 25 et 35 mmol.L⁻¹, par exemple 30 mmol.L⁻¹; et de l'allopurinol à une concentration avantageusement comprise entre 0,5 et 1,5 mmol.L⁻¹, par exemple 1 mmol.L⁻¹; ou alternativement
- du mannitol à une concentration avantageusement comprise entre 40 et 80 mmol.L⁻¹, par exemple 60 mmol.L⁻¹, et de l'histidine à une concentration avantageusement comprise entre 25 et 35 mmol.L⁻¹, par exemple 30 mmol.L⁻¹.

Dans un mode de réalisation particulier, la solution selon l'invention comprend en outre:
- de l'acide lactobionique à une concentration avantageusement comprise entre 80 et 120 mmol.L⁻¹, par exemple 100 mmol.L⁻¹;
- des ions sulfates (SO₄²⁻), de préférence apportés par le sulfate de magnésium (MgSO₄), à une concentration avantageusement comprise entre 4 et 6 mmol.L⁻¹, par exemple 5 mmol.L⁻¹ ;
- des ions phosphates (PO₄³⁻), de préférence apportés par le phosphate de potassium (KH₂PO₄), à une concentration avantageusement comprise entre 20 et 30 mmol.L⁻¹ , par exemple 25 mmol.L⁻¹; et
- de l'adénosine à une concentration avantageusement comprise entre 4 et 6 mmol.L⁻¹, par exemple 5 mmol.L⁻¹.

Dans un mode de réalisation préféré, la composition de la solution selon l'invention comprend :
- du PEG 35000 à une concentration de 5 g.L⁻¹ ;
- du glutathion à une concentration de 9 mmol.L⁻¹ ;
- des ions Zn²⁺ à une concentration de 0,191 mmol.L⁻¹;
- des ions NO²⁻ à une concentration de 50 nmol.L⁻¹ ;
- du raffinose à une concentration de 30 mmol.L⁻¹ ;
- de l'acide lactobionique à une concentration de 100 mmol.L⁻¹ ;
- des ions SO₄²⁻, de préférence apportés par le MgSO₄, à une concentration de 5 mmol.L⁻¹ ;
- des ions PO₄³⁻, de préférence apportés par le KH₂PO₄, à une concentration de 25 mmol.L⁻¹ ;
- de l'adénosine à une concentration de 5 mmol.L⁻¹ ;
- de l'allopurinol à une concentration de 1 mmol.L⁻¹.

Dans un autre mode de réalisation préféré, la composition de la solution selon l'invention comprend :
- du PEG 35000 à une concentration de 5 g.L⁻¹ ;
- du glutathion à une concentration de 9 mmol.L⁻¹ ;
- des ions Zn²⁺ à une concentration de 0,091 mmol.L⁻¹;
- des ions NO²⁻ à une concentration de 50 nmol.L⁻¹ ;
- du raffinose à une concentration de 30 mmol.L⁻¹ ;
- de l'acide lactobionique à une concentration de 100 mmol.L⁻¹ ;
- des ions SO₄²⁻, de préférence apportés par le MgSO₄, à une concentration de 5 mmol.L⁻¹ ;
- des ions PO₄³⁻, de préférence apportés par le KH₂PO₄, à une concentration de 25 mmol.L⁻¹ ;
- de l'adénosine à une concentration de 5 mmol.L⁻¹ ;
- de l'allopurinol à une concentration de 1 mmol.L⁻¹.

Dans un autre mode de réalisation préféré, la composition de la solution selon l'invention comprend :
- du PEG 35000 à une concentration de 5 g.L⁻¹ ;
- du glutathion à une concentration de 9 mmol.L⁻¹ ;
- des ions Zn²⁺ à une concentration de 0,191 mmol.L⁻¹ ;
- des ions NO²⁻ à une concentration de 50 nmol.L⁻¹ ;
- du mannitol à une concentration de 60 mmol.L⁻¹ ;
- de l'acide lactobionique à une concentration de 100 mmol.L⁻¹ ;
- des ions SO₄²⁻, de préférence apportés par le MgSO₄, à une concentration de 5 mmol.L⁻¹ ;
- des ions PO₄³⁻, de préférence apportés par le KH₂PO₄, à une concentration de 25 mmol.L⁻¹ ;
- de l'adénosine à une concentration de 5 mmol.L⁻¹.

Dans un autre mode de réalisation préféré, la composition de la solution selon l'invention comprend :
- du PEG 35000 à une concentration de 5 g.L⁻¹ ;
- du glutathion à une concentration de 9 mmol.L⁻¹ ;
- des ions Zn²⁺ à une concentration de 0,091 mmol.L⁻¹ ;
- des ions NO²⁻ à une concentration de 50 nmol.L⁻¹ ;
- du mannitol à une concentration de 60 mmol.L⁻¹ ;
- de l'acide lactobionique à une concentration de 100 mmol.L⁻¹ ;
- des ions SO₄²⁻, de préférence apportés par le MgSO₄, à une concentration de 5 mmol.L⁻¹ ;
- des ions PO₄³⁻, de préférence apportés par le KH₂PO₄, à une concentration de 25 mmol.L⁻¹ ;
- de l'adénosine à une concentration de 5 mmol.L⁻¹.

Dans un autre mode de réalisation préféré, la composition de la solution selon l'invention comprend :
- du PEG 35000 à une concentration de 5 g.L⁻¹ ;
- du glutathion à une concentration de 9 mmol.L⁻¹ ;
- des ions Zn²⁺ à une concentration de 0,191 mmol.L⁻¹ ;
- des ions NO²⁻ à une concentration de 50 nmol.L⁻¹ ;
- du mannitol à une concentration de 60 mmol.L⁻¹ ;
- de l'histidine à une concentration de 30 mmol.L⁻¹ ;
- de l'acide lactobionique à une concentration de 100 mmol.L⁻¹ ;
- des ions SO₄²⁻, de préférence apportés par le MgSO₄, à une concentration de 5 mmol.L⁻¹ ;
- des ions PO₄³⁻, de préférence apportés par le KH₂PO₄, à une concentration de 25 mmol.L⁻¹ ;
- de l'adénosine à une concentration de 5 mmol.L⁻¹.

Dans un autre mode de réalisation préféré, la composition de la solution selon l'invention comprend :
- du PEG 35000 à une concentration de 5 g.L⁻¹ ;
- du glutathion à une concentration de 9 mmol.L⁻¹ ;
- des ions Zn²⁺ à une concentration de 0,091 mmol.L⁻¹ ;
- des ions NO²⁻ à une concentration de 50 nmol.L⁻¹ ;
- du mannitol à une concentration de 60 mmol.L⁻¹ ;
- de l'histidine à une concentration de 30 mmol.L⁻¹ ;
- de l'acide lactobionique à une concentration de 100 mmol.L⁻¹ ;
- des ions SO₄²⁻, de préférence apportés par le MgSO₄, à une concentration de 5 mmol.L⁻¹ ;
- des ions PO₄³⁻, de préférence apportés par le KH₂PO₄, à une concentration de 25 mmol.L⁻¹ ;
- de l'adénosine à une concentration de 5 mmol.L⁻¹.

Selon un autre aspect, l'invention concerne l'utilisation de la solution selon l'invention pour la préservation, avantageusement hypothermique, statique d'un organe à transplanter.

Selon l'invention, la solution est utilisée à une température avantageusement comprise entre +1 et +12°C, de préférence entre +2 et +8°C, par exemple +5°C, pour la préservation statique d'un organe à transplanter.

Selon un autre aspect, l'invention concerne l'utilisation de la solution selon l'invention pour la préservation, avantageusement hypothermique, dynamique d'un organe à transplanter.

Selon l'invention, la solution est utilisée à une température avantageusement comprise entre +1 et +12°C, de préférence entre +2 et +8°C, par exemple +5°C, pour la préservation dynamique d'un organe à transplanter.

Selon un mode de réalisation particulier, la solution selon l'invention est utilisée pour la perfusion d'un greffon dans une machine à écoulement continu.

Selon un mode de réalisation particulier, la solution selon l'invention est utilisée pour la perfusion d'un greffon dans une machine à écoulement pulsatile.

Selon un autre aspect, l'invention concerne l'utilisation de la solution selon l'invention pour le rinçage d'un organe à transplanter.

Selon l'invention, la solution est utilisée à une température avantageusement comprise entre +1 et +12°C, de préférence entre +2 et +8°C, par exemple +5°C, pour le rinçage d'un organe à transplanter.

Selon un mode de réalisation particulier, la solution selon l'invention est utilisée pour rincer l'organe à transplanter et pour assurer sa préservation, statique ou dynamique, avant transplantation à un receveur.

Selon un mode de réalisation particulier, l'organe à transplanter est un organe sain ou « marginal ».

Selon un mode de réalisation particulier, l'organe à transplanter est un organe abdominal, de préférence le foie, le pancréas, le rein ou les intestins.

Selon un mode de réalisation particulier, le foie à transplanter est un foie sain ou un foie stéatosique.

Selon un autre mode de réalisation, l'organe à transplanter est un tissu.

A titre d'exemple, un tissu selon l'invention est la cornée, l'os, la peau, les vaisseaux sanguins, les tendons ou encore les valves cardiaques.

L'invention et les avantages qui en découlent ressortiront mieux des figures et des exemples suivants donnés afin d'illustrer l'invention et non de manière limitative.
[Fig. 1] La figure 1 représente la quantification, de l'activité en aldéhyde déshydrogénase-2 (ALDH 2) après 24 heures de préservation hypothermique statique d'un foie dans une solution UW^{®}, IGL-0, IGL-1 ou selon l'invention (INV).
[Fig. 2] La figure 2 représente la quantification de la teneur en transaminases dans le tissu hépatique après 24 heures de préservation hypothermique statique d'un foie dans une solution UW^{®}, IGL-1 ou selon l'invention (INV).
[Fig. 3] La figure 3 représente la quantification de la teneur en glutamate déshydrogénase (GLDH) dans le tissu hépatique après 24 heures de préservation hypothermique statique d'un foie dans une solution UW^{®}, IGL-1 ou selon l'invention (INV).
[Fig. 4] La figure 4 représente la détermination de la quantité de cellules présentes dans l'effluent de rinçage d'un foie sain ou d'un foie stéatosique, rincé avec la solution IGL-1^{®} ou la solution selon l'invention (INV).
[Fig. 5] La figure 5 représente la quantification du nombre de globules rouges restant dans le tissu hépatique après rinçage d'un foie sain ou d'un foie stéatosique, avec la solution UW^{®}, IGL-1^{®} ou la solution selon l'invention (INV).
[Fig. 6] La figure 6 représente l'évaluation de l'activité en aldéhyde déshydrogénase-2 (ALDH 2) dans le foie après préservation hypothermique dynamique avec la solution PERF-GEN^{®} ou la solution selon l'invention (INV).
[Fig. 7] La figure 7 représente l'évaluation de la dégradation du parenchyme hépatique par mesure de la teneur en aspartate aminotransférase (ASAT) dans le foie après préservation hypothermique dynamique avec la solution PERF-GEN^{®} ou la solution selon l'invention (INV).
[Fig. 8] La figure 8 représente l'évaluation de la dégradation du parenchyme hépatique par mesure de la teneur en glutamate déshydrogénase (GLDH) dans le foie après préservation hypothermique dynamique avec la solution PERF-GEN^{®} ou la solution selon l'invention (INV).

### EXEMPLE DE REALISATION DE L'INVENTION

### 1/ Préparation de la solution de préservation et de rinçage selon l'invention

Une solution selon l'invention est préparée par mélange des ingrédients selon la formulation (pour 1 litre) du Tableau 1 :

**[Tableau 1]**

| **Ingrédient** | **Concentration** |
|---|---|
| PEG 35000 (poids moléculaire de 35000 g.L⁻¹) | 0,14 mM (soit 5 g.L⁻¹) |
| Na⁺ (apporté par NaOH) | 125 mM |
| K⁺ (apporté par KH₂PO₄) | 25 mM |
| Zn²⁺ (apporté par ZnCl₂) | 0,191 mM |
| Glutathion | 9 mM |
| NO²⁻ (apporté par NaNO₂) | 50 nM |
| Raffinose | 30 mM |
| Acide lactobionique | 100 mM |
| SO₄²⁻ (apporté par MgSO₄) | 5 mM |
| PO₄³⁻ (apporté par KH₂PO₄) | 25 mM |
| Adénosine | 5 mM |
| Allopurinol | 1 mM |

La préparation de la solution consiste à dissoudre l'ensemble des ingrédients, sous agitation magnétique, dans une solution aqueuse, le pH de la solution obtenue est ajusté à 7,4.

### 2/ Comparaison de la viscosité des solutions de l'art antérieur par rapport à la solution selon l'invention

La viscosité a été déterminée par la méthode de la pharmacopée européenne du chapitre 2.2.9 « Viscosité - Méthode au tube capillaire ».

**[Tableau 2]**

| **Solution** | **IGL-1^{®}** | **INV** | **Perf-Gen^{®}** |
|---|---|---|---|
| **Utilisation** | Préservation statique | Rinçage + Préservation statique + préservation dynamique | Préservation dynamique |
| **Agent oncotique** | PEG 35 (1g.L⁻¹) | PEG 35 (5 g.L⁻¹) | HES (50 g.L⁻¹) |
| **Viscosité (cP)** | 1,2 | 1,4 | 2,4 |

Ces résultats montrent que, de manière inattendue, l'augmentation importante de la concentration en PEG dans la solution INV par rapport à la solution IGL-1^{®}, n'induit pas une augmentation de la viscosité de la solution.

La viscosité de la solution selon l'invention est donc adaptée à son utilisation pour la préservation statique (comme IGL-1^{®}) et dynamique (comme Perf-Gen^{®}).

### 3/ Préservation statique d'un foie en condition d'hypothermie

Pour apprécier l'efficacité de la solution de préservation selon l'invention des évaluations ont été menées sur des foies sains ou atteints de stéatose.

### 3.1/ Conditions expérimentales

Le foie de rats normaux (sains) et de rats obèse (rats Zucker ; foie stéatosique et désigné par le terme « Ob » ou « fatty » dans les figures) âgés de 10 à 12 semaines a été prélevé puis conservé selon les techniques connues de l'homme du métier.

Ces expériences ont pour but de comparer les performances de la solution selon l'invention (Solution INV) sur la préservation en hypothermie du foie *ex vivo* par rapport à une solution IGL-0 (solution IGL-1^{®} formulée sans PEG) ou à des solutions de l'art antérieur, à savoir :
- Solution Belzer UW^{®} (ci-après dénommée UW);
- Solution IGL-1^{®}.

L'organe est ensuite conservé de manière statique dans la solution de rinçage (100 mL ; HTK^{®}, IGL-1^{®} ou INV) pendant 24h à 4°C.

Différents paramètres ont été mesurés pour évaluer l'efficacité de la solution selon l'invention sur la préservation hépatique en condition d'hypothermie.

### 3.2/ Quantification de la teneur en aldéhyde déshydrogénase-2 dans le tissu hépatique

L'aldéhyde déshydrogénase mitochondriale 2 (ALDH 2) est une enzyme majeure du métabolisme de l'aldéhyde qui protège contre l'accumulation toxique d'aldéhyde au niveau cellulaire, par exemple, en assurant la transformation de l'acétaldéhyde en acide acétique. L'activation de l'aldéhyde déshydrogénase-2 (ALDH2) est associée à une protection des cellules de l'organe à transplanter.

Après 24h de préservation dans les solutions UW^{®}, IGL-0 (solution IGL-1^{®} formulée sans PEG), IGL-1^{®} ou INV une analyse de l'activation de l'ALDH2 par kit enzymatique a été faite sur des foies sains.

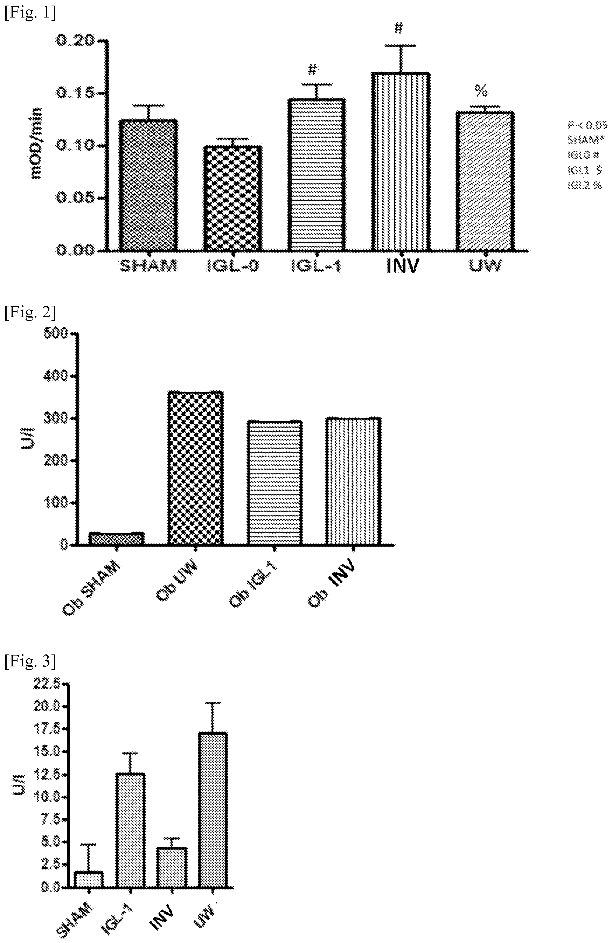

Les résultats sont représentés par la figure 1.

Les données montrent que la préservation du foie dans une solution INV induit une augmentation de l'activité ALDH2 dans le tissu par rapport aux solutions IGL-0, IGL-1^{®} et UW^{®}. Il en résulte une protection de l'organe contre les dommages liés l'ischémie.

La formulation des solutions IGL-0 et UW est exempte de PEG. Ces résultats montrent donc que le PEG 35 utilisé à une concentration selon l'invention dans la solution INV assure une meilleure protection de l'organe (valeur de p < 0,05).

### 3.3/ Quantification de la teneur en transaminases dans le tissu hépatique

Les transaminases (alanine aminotransférase, aspartate aminotransférase...) sont des enzymes synthétisées par les hépatocytes et relâchées en cas de lésion ou nécrose hépatocellulaire. La concentration en transaminases est donc un marqueur de l'efficacité de la préservation du foie par une solution de préservation.

Après 24h de préservation dans les solutions UW^{®}, IGL-1^{®} ou INV une analyse quantitative des taux de transaminases par kit enzymatique a été faite sur des foies stéatosiques.

Les résultats sont représentés par la figure 2.

Les données montrent que la concentration en transaminases est plus faible après 24h de préservation avec la solution INV selon l'invention par rapport à celle avec la solution UW^{®}. En d'autres termes, la solution INV assure une meilleure préservation que la solution UW^{®}.

### 3.4/ Quantification de la teneur en glutamate déshydrogénase dans le tissu hépatique

La glutamate déshydrogénase (GLDH) est une enzyme mitochondriale spécifique du foie qui joue un rôle important dans le catabolisme des acides aminés. Elle participe à la désamination de l'acide glutamique (ou glutamate) en acide α-cétoglutarate. Une augmentation de la concentration sérique en GLDH indique une dégradation du parenchyme hépatique et plus spécifiquement une dégradation de la mitochondrie.

Après 24h de préservation dans les solutions UW^{®}, IGL-1^{®} ou INV une analyse quantitative des taux de GLDH par kit enzymatique a été faite sur des foies stéatosiques.

Les résultats sont représentés par la figure 3.

Les données montrent que la concentration en GLDH est 2,5 fois plus faible après 24h de préservation avec la solution INV par rapport à celle avec la solution IGL-1^{®} et 5 fois plus faible qu'avec la préservation avec la solution UW^{®}. Ces résultats indiquent que la solution INV assure une meilleure préservation du foie à transplanter que des solutions de l'art antérieur.

### 4/ Rinçage d'un foie à transplanter

### 4.1/ Conditions expérimentales

Le foie de rats normaux (sains) et de rats obèses (rats Zucker ; foie stéatosique et désigné par le terme « Ob » ou « fatty » dans les figures) âgés de 10 à 12 semaines a été prélevé puis lavé selon les techniques connues de l'homme du métier.

Ces expériences ont pour but de comparer les performances de rinçage de la solution selon l'invention (Solution INV) par rapport à celles des solutions de l'art antérieur, à savoir :
- Solution Belzer UW^{®} (ci-après dénommée UW);
- Solution de préservation HTK^{®} (pour histidine-tryptophane-cétoglutarate ou solution de Custodiol^{®} HTK) ;
- Solution IGL-1^{®}.

Le foie est rincé par influx de la solution de rinçage par l'aorte et efflux par la veine porte.

Différents paramètres ont été mesurés pour évaluer l'efficacité de la solution selon l'invention sur le rinçage hépatique.

### 4.2/ Détermination de la quantité de cellules présentes dans l'effluent de rinçage du tissu hépatique

Les performances de rinçage de la solution selon l'invention (INV) sont évaluées à :
- T0 (dissection aortique après que le volume total de rinçage soit passé par l'aorte dans tous les groupes expérimentaux à l'exception de HTK) ;
- T1 (après que le volume de rinçage total soit passé par l'aorte dans le groupe HTK) ;
- T2 (après que le volume total de rinçage soit passé par la veine porte) ; et
- T24 (24 heures post-ischémie), sur des foies sains et stéatosiques, en comparaison avec la solution IGL-1^{®}.

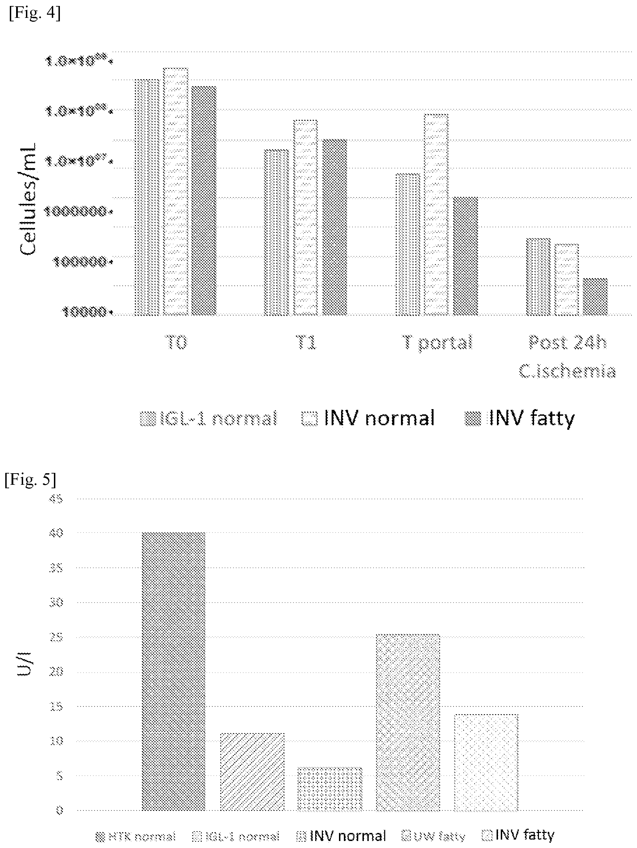

Les résultats sont représentés par la figure 4.

Les données montrent que, pour le foie sain, l'effluent obtenu après le rinçage du foie avec la solution INV est plus concentré en cellules, en l'espèce en globules rouges, que la solution IGL-1^{®} à T0, T1 et T2. L'effluent INV est donc plus « sale », plus concentré en globules rouges, que l'effluent d'IGL-1 tout au long de la procédure de prélèvement du foie. La solution INV selon l'invention assure donc un meilleur rinçage du foie que la solution IGL-1^{®}.

De façon connue de l'homme du métier, le rinçage d'un foie stéatosique est moins efficace que celui d'un foie sain en raison de l'atteinte cellulaire et tissulaire. Les résultats montrent que la solution INV induit une diminution de la concentration en cellules dans l'effluent au cours du temps. Ces données traduisent donc que la solution selon l'invention assure un rinçage efficace du foie stéatosique.

### 4.3/ Quantification du nombre de globules rouges présents dans le tissu hépatique après rinçage

Une analyse histologique a été menée afin de quantifier le nombre de globules rouges restants dans :
- le tissu hépatique sain, après prélèvement et rinçage avec les solutions HTK^{®}, IGL-1 et INV ; et
- le tissu hépatique stéatosique (« fatty »), après prélèvement et rinçage avec les solutions UW et INV.

Les résultats sont représentés par la figure 5.

Concernant le foie sain, les données montrent que le foie rincé avec la solution INV contient 7 fois moins de globules rouges que le foie rincé avec la solution HTK^{®} et 2 fois moins que celui rincé avec la solution IGL-1^{®}.

Concernant le foie stéatosique, les données montrent que le foie rincé avec la solution INV contient plus d'1,5 fois moins de globules rouges que le foie rincé avec la solution UW^{®}.

Ces résultats confirment que la solution selon l'invention assure un meilleur rinçage hépatique que les solutions de l'art antérieur.

### 5/ Perfusion dynamique d'un foie

### 5.1/ Perfusion dynamique en condition d'hypothermie d'un foie

Une machine de perfusion hypothermique est utilisée pour conserver un foie à transplanter cette appareillage permet de mettre en œuvre le protocole HOPE (Hypothermic Oxygenated Perfusion ou perfusion oxygénée hypothermique) qui assure une oxygénation passive de la perfusion hypothermique, c'est-à-dire sans transporteur de l'oxygène, ce qui protège l'intégrité mitochondriale, et permet de diminuer les lésions d'ischémie-reperfusion hépatique.

Le foie à transplanter est conservé dans une solution de préservation pendant 7h, puis placé dans une machine de perfusion hypothermique pendant 1h afin d'être soumis au protocole HOPE. Le foie est ensuite reperfusé avec une solution Krebs en normothermie.

La solution Perf-Gen^{®} est une des solutions de l'art antérieur utilisée dans une machine de perfusion hypothermique. Cette solution comprend de l'amidon hydroxyéthylé comme agent oncotique et du glucose comme agent osmotique.

Ces expériences ont pour but de comparer les performances de la solution selon l'invention (Solution INV) par rapport à la solution Perf-Gen^{®}.

Différents paramètres ont été mesurés pour évaluer l'efficacité de la solution selon l'invention sur la préservation hépatique en condition de perfusion dynamique en hypothermie :

### 5.2/ Evaluation de la teneur en ALDH2 dans le tissu hépatique

La concentration en ALDH2 a été mesurée dans le tissu hépatique sain pour évaluer les propriétés de la protection des cellules de l'organe à transplanter de la solution INV utilisée dans un appareil de perfusion selon le protocole HOPE (voir point 3.4), par rapport à la solution Perf-Gen^{®}.

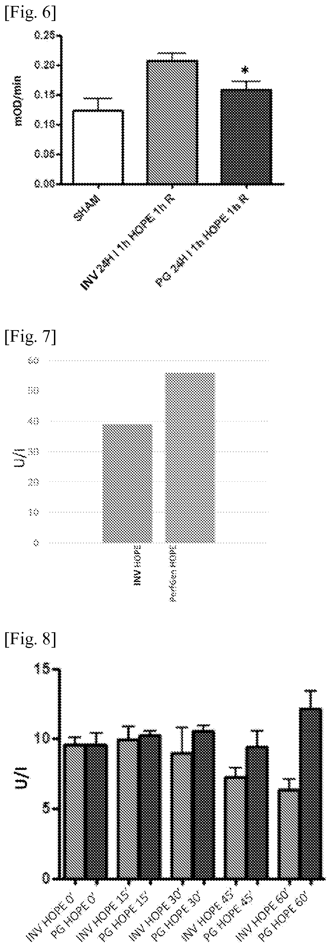

Les résultats sont représentés par la figure 6.

Les données montrent que la solution INV selon l'invention induit une activité ALDH2 significativement supérieure par rapport à celle de la solution Perf-Gen^{®} après une perfusion dynamique en hypothermie.

### 5.3/ Evaluation de la dégradation du parenchyme hépatique

### 5.3.1/ Aspartate aminotransférase

La teneur en aspartate aminotransférase (ASAT), un type de transaminase particulier, a été mesurée par kit enzymatique, 1h après avoir été placé sous protocole HOPE (voir point 3.4).

Les résultats sont représentés par la figure 7.

Les données montrent une plus faible teneur en ASAT dans le tissu hépatique perfusé avec la solution selon l'invention en comparaison de l'utilisation de la solution de l'art antérieur.

### 5.3.2/ GLDH

La teneur en GLDH a été mesurée par kit enzymatique, au lancement du protocole HOPE puis toutes les 15 minutes, soit à 0, 15, 30, 45 et 60 minutes.

Les résultats sont représentés par la figure 8.

Les données montrent que la perfusion avec la solution INV assure une diminution de la teneur en GLDH par rapport à la solution Perf-Gen^{®}.

En conclusion, la perfusion avec la solution selon l'invention d'un foie dans une machine à perfuser hypothermique conduit à de plus faibles teneurs en ASAT et GLDH traduisant une diminution de la dégradation du tissu hépatique par rapport à la solution Perf-Gen^{®}.

### 6/ Conclusion

La solution selon l'invention est adaptée à une utilisation pour la préservation statique en hypothermie d'un organe à transplanter et/ou pour le rinçage dynamique de l'organe dans un appareil de perfusion hypothermique. En outre, dans ces 2 contextes d'utilisation, la solution INV selon l'invention est plus efficace que les solutions de l'art antérieur. INV permet de protéger l'organe à transplanter et de diminuer les dommages du tissu hépatique causés par l'ischémie et la reperfusion

## Revendications

1. Solution aqueuse de préservation et/ou de rinçage d'organe à transplanter comprenant :
- des ions sodium (Na⁺) à une concentration comprise entre 30 et 150 mmol.L⁻¹ ;
- des ions potassium (K⁺) à une concentration comprise entre 10 et 40 mmol.L⁻¹ ;
- du polyéthylène glycol de masse molaire de 35000 g.mol⁻¹ (PEG 35000) à une concentration comprise entre 2 et 5 g.L⁻¹.

2. Solution selon la revendication 1, **caractérisée en ce qu'**elle comprend en outre du glutathion, comme agent antioxydant, à une concentration comprise entre 1 et 11 mmol.L⁻¹.

3. Solution selon l'une des revendications précédentes, **caractérisée en ce qu'**elle comprend en outre des ions zinc (Zn²⁺) à une concentration comprise entre 0,08 et 0,210 mmol.L⁻¹.

4. Solution selon l'une des revendications précédentes, **caractérisée en ce qu'**elle comprend en outre des ions nitrites (NO²⁻) à une concentration comprise entre 5 et 100 nmol.L⁻¹.

5. Solution selon l'une des revendications précédentes, **caractérisée en ce que** le pH est compris entre 7,2 et 7,6, de préférence égal à 7,4.

6. Solution selon l'une des revendications précédentes, **caractérisée en ce qu'**elle comprend en outre un anion imperméant, un sucre, un agent stabilisant de membrane cellulaire, une solution tampon et/ou une source d'énergie.

7. Solution selon l'une des revendications précédentes, **caractérisée en ce qu'**elle comprend en outre :
- du raffinose à une concentration comprise entre 25 et 35 mmol.L⁻¹ et de l'allopurinol à une concentration comprise entre 0,5 et 1,5 mmol.L⁻¹ ; ou
- du mannitol à une concentration comprise entre 40 et 80 mmol.L⁻¹, avantageusement du mannitol à une concentration comprise entre 40 et 80 mmol.L⁻¹ et de l'histidine à une concentration comprise entre 25 et 35 mmol.L⁻¹.

8. Solution selon l'une des revendications précédentes, **caractérisée en ce qu'**elle comprend en outre:
- de l'acide lactobionique à une concentration comprise entre 80 et 120 mmol.L⁻¹ ;
- des ions sulfates (SO₄²⁻), de préférence apportés par le sulfate de magnésium (MgSO₄), à une concentration comprise entre 4 et 6 mmol.L⁻¹ ;
- des ions phosphates (PO₄³⁻), de préférence apportés par le phosphate de potassium (KH₂PO₄), à une concentration comprise entre 20 et 30 mmol.L⁻¹ ; et
- de l'adénosine à une concentration comprise entre 4 et 6 mmol.L⁻¹.

9. Solution selon l'une des revendications précédentes, **caractérisée en ce qu'**elle comprend:
- du PEG 35000 à une concentration de 5 g.L⁻¹ ;
- du glutathion à une concentration de 9 mmol.L⁻¹ ;
- des ions Zn²⁺ à une concentration de 0,191 mmol.L⁻¹ ;
- des ions NO²⁻ à une concentration de 50 nmol.L⁻¹ ;
- du raffinose à une concentration de 30 mmol.L⁻¹ ;
- de l'acide lactobionique à une concentration de 100 mmol.L⁻¹ ;
- des ions SO₄²⁻, de préférence apportés par le MgSO₄, à une concentration de 5 mmol.L⁻¹ ;
- des ions PO₄³⁻, de préférence apportés par le KH₂PO₄, à une concentration de 25 mmol.L⁻¹ ;
- de l'adénosine à une concentration de 5 mmol.L⁻¹ ;
- de l'allopurinol à une concentration de 1 mmol.L⁻¹.

10. Solution selon l'une des revendications 1 à 8, **caractérisée en ce qu'**elle comprend:
- du PEG 35000 à une concentration de 5 g.L⁻¹ ;
- du glutathion à une concentration de 9 mmol.L⁻¹ ;
- des ions Zn²⁺ à une concentration de 0,191 mmol.L⁻¹ ;
- des ions NO²⁻ à une concentration de 50 nmol.L⁻¹ ;
- du mannitol à une concentration de 60 mmol.L⁻¹ ;
- de l'acide lactobionique à une concentration de 100 mmol.L⁻¹ ;
- des ions SO₄²⁻, de préférence apportés par le MgSO₄, à une concentration de 5 mmol.L⁻¹ ;
- des ions PO₄³⁻, de préférence apportés par le KH₂PO₄, à une concentration de 25 mmol.L⁻¹ ;
- de l'adénosine à une concentration de 5 mmol.L⁻¹.

11. Solution selon l'une des revendications 1 à 8, **caractérisée en ce qu'**elle comprend:
- du PEG 35000 à une concentration de 5 g.L⁻¹ ;
- du glutathion à une concentration de 9 mmol.L⁻¹ ;
- des ions Zn²⁺ à une concentration de 0,191 mmol.L⁻¹ ;
- des ions NO²⁻ à une concentration de 50 nmol.L⁻¹ ;
- du mannitol à une concentration de 60 mmol.L⁻¹ ;
- de l'histidine à une concentration de 30 mmol.L⁻¹ ;
- de l'acide lactobionique à une concentration de 100 mmol.L⁻¹ ;
- des ions SO₄²⁻, de préférence apportés par le MgSO₄, à une concentration de 5 mmol.L⁻¹ ;
- des ions PO₄³⁻, de préférence apportés par le KH₂PO₄, à une concentration de 25 mmol.L⁻¹ ;
- de l'adénosine à une concentration de 5 mmol.L⁻¹.

12. Utilisation d'une solution selon l'une des revendications 1 à 10, pour la préservation statique d'organe à transplanter.

13. Utilisation d'une solution selon l'une des revendications 1 à 10, pour la préservation dynamique d'organe à transplanter.

14. Utilisation d'une solution selon l'une des revendications 1 à 10, pour le rinçage d'organe à transplanter.

15. Utilisation selon l'une des revendication **12 à 14, caractérisée en ce que** l'organe à transplanter est un organe abdominal, de préférence le foie, le pancréas, le rein ou les intestins.

## Patentansprüche

1. Wässrige Konservierungs- und/oder Spüllösung für ein zu transplantierendes Organ, die Folgendes umfasst:
- Natriumionen (Na⁺) in einer Konzentration zwischen 30 und 150 mmol.L⁻¹;
- Kaliumionen (K⁺) in einer Konzentration zwischen 10 und 40 mmol.L⁻¹;
- Polyethylenglykol mit einer Molmasse von 35000 g.mol⁻¹ (PEG 35000) in einer Konzentration zwischen 2 und 5 g.L⁻¹.

2. Lösung nach Anspruch 1, **dadurch gekennzeichnet, dass** sie zusätzlich Glutathion als Antioxidationsmittel in einer Konzentration zwischen 1 und 11 mmol.L⁻¹ enthält.

3. Lösung nach einem der vorhergehenden Ansprüche, **dadurch gekennzeichnet, dass** sie zusätzlich Zinkionen (Zn²⁺) in einer Konzentration zwischen 0,08 und 0,210 mmol.L⁻¹ enthält.

4. Lösung nach einem der vorhergehenden Ansprüche, **dadurch gekennzeichnet, dass** sie zusätzlich Nitrit-Ionen (NO²⁻) in einer Konzentration zwischen 5 und 100 nmol.L⁻¹ enthält.

5. Lösung nach einem der vorhergehenden Ansprüche, **dadurch gekennzeichnet, dass** der pH-Wert zwischen 7,2 und 7,6 liegt, vorzugsweise gleich 7,4 ist.

6. Lösung nach einem der vorhergehenden Ansprüche, **dadurch gekennzeichnet, dass** sie zusätzlich ein wasserundurchlässiges Anion, einen Zucker, ein Stabilisierungsmittel aus Zellmembran, eine Pufferlösung und/oder eine Energiequelle enthält.

7. Lösung nach einem der vorhergehenden Ansprüche, **dadurch gekennzeichnet, dass** sie außerdem Folgendes enthält:
- Raffinose in einer Konzentration zwischen 25 und 35 mmol.L⁻¹ und Allopurinol in einer Konzentration zwischen 0,5 und 1,5 mmol.L⁻¹; oder
- Mannitol in einer Konzentration zwischen 40 und 80 mmol.L⁻¹, vorzugsweise Mannitol in einer Konzentration zwischen 40 und 80 mmol.L⁻¹ und Histidin in einer Konzentration zwischen 25 und 35 mmol.L⁻¹.

8. Lösung nach einem der vorhergehenden Ansprüche, **dadurch gekennzeichnet, dass** sie außerdem Folgendes enthält:
- Lactobionsäure in einer Konzentration zwischen 80 und 120 mmol.L⁻¹;
- Sulfationen (SO₄²⁻), die vorzugsweise durch Magnesiumsulfat (MgSO₄) in einer Konzentration zwischen 4 und 6 mmol.L⁻¹ zugeführt werden;
- Phosphationen (PO₄³⁻), die vorzugsweise durch Kaliumphosphat (KH₂PO₄) in einer Konzentration zwischen 20 und 30 mmol.L⁻¹ zugeführt werden; und
- von Adenosin in einer Konzentration zwischen 4 und 6 mmol.L⁻¹.

9. Lösung nach einem der vorhergehenden Ansprüche, **dadurch gekennzeichnet, dass** sie Folgendes umfasst:
- PEG 35000 in einer Konzentration von 5 g.L⁻¹;
- Glutathion in einer Konzentration von 9 mmol.L⁻¹;
- Zn²⁺-Ionen in einer Konzentration von 0,191 mmol.L⁻¹;
- NO²⁻-Ionen in einer Konzentration von 50 nmol.L⁻¹;
- Raffinose in einer Konzentration von 30 mmol.L⁻¹;
- Lactobionsäure in einer Konzentration von 100 mmol.L⁻¹;
- SO₄²⁻-Ionen, die vorzugsweise durch MgSO₄ in einer Konzentration von 5 mmol.L⁻¹ zugeführt werden;
- PO₄³⁻-Ionen, die vorzugsweise durch KH₂PO₄ in einer Konzentration von 25 mmol.L⁻¹ zugeführt werden;
- Adenosin in einer Konzentration von 5 mmol.L⁻¹;
- Allopurinol in einer Konzentration von 1 mmol.L⁻¹.

10. Lösung nach einem der Ansprüche 1 bis 8, **dadurch gekennzeichnet, dass** sie Folgendes umfasst:
- PEG 35000 in einer Konzentration von 5 g.L⁻¹;
- Glutathion in einer Konzentration von 9 mmol.L⁻¹;
- Zn²⁺-Ionen in einer Konzentration von 0,191 mmol.L⁻¹;
- NO²⁻-Ionen in einer Konzentration von 50 nmol.L⁻¹;
- Mannitol in einer Konzentration von 60 mmol.L⁻¹;
- Lactobionsäure in einer Konzentration von 100 mmol.L⁻¹;
- SO₄²⁻-Ionen, die vorzugsweise durch MgSO₄ in einer Konzentration von 5 mmol.L⁻¹ zugeführt werden;
- PO₄³⁻-Ionen, die vorzugsweise durch KH₂PO₄ in einer Konzentration von 25 mmol.L⁻¹ zugeführt werden;
- Adenosin in einer Konzentration von 5 mmol.L⁻¹.

11. Lösung nach einem der Ansprüche 1 bis 8, **dadurch gekennzeichnet, dass** sie Folgendes umfasst:
- PEG 35000 in einer Konzentration von 5 g.L⁻¹;
- Glutathion in einer Konzentration von 9 mmol.L⁻¹;
- Zn²⁺-Ionen in einer Konzentration von 0,191 mmol.L⁻¹;
- NO²⁻-Ionen in einer Konzentration von 50 nmol.L⁻¹;
- Mannitol in einer Konzentration von 60 mmol.L⁻¹;
- Histidin in einer Konzentration von 30 mmol.L⁻¹;
- Lactobionsäure in einer Konzentration von 100 mmol.L⁻¹;
- SO₄²⁻-Ionen, die vorzugsweise durch MgSO₄ in einer Konzentration von 5 mmol.L⁻¹ zugeführt werden;
- PO₄³⁻-Ionen, die vorzugsweise durch KH₂PO₄ in einer Konzentration von 25 mmol.L⁻¹ zugeführt werden;
- Adenosin in einer Konzentration von 5 mmol.L⁻¹.

12. Verwendung einer Lösung nach einem der Ansprüche 1 bis 10 zur statischen Konservierung von Organen, die transplantiert werden sollen.

13. Verwendung einer Lösung nach einem der Ansprüche 1 bis 10 zur dynamischen Konservierung von Organen, die transplantiert werden sollen.

14. Verwendung einer Lösung nach einem der Ansprüche 1 bis 10 zum Spülen von Organen, die transplantiert werden sollen.

15. Verwendung nach einem der Ansprüche 12 bis 14, **dadurch gekennzeichnet, dass** das zu transplantierende Organ ein Unterleibsorgan, vorzugsweise die Leber, die Bauchspeicheldrüse, die Niere oder der Darm ist.

## Claims

1. An aqueous solution for preserving and/or rinsing organs to be transplanted comprising:
- sodium (Na⁺) ions at a concentration between 30 and 150 mmol.L⁻¹;
- potassium ions (K⁺) at a concentration between 10 and 40 mmol.L⁻¹;
- polyethylene glycol with a molecular weight of 35,000 g.mol⁻¹ (PEG 35000) at a concentration between 2 and 5 g.L⁻¹.

2. A solution according to claim 1, **characterized in that** it further comprises glutathione, as an antioxidant agent, at a concentration between 1 and 11 mmol.L⁻¹.

3. A solution according to one of the preceding claims, **characterized in that** it further comprises zinc ions (Zn²⁺) at a concentration between 0.08 and 0.210 mmol.L⁻¹.

4. A solution according to one of the preceding claims, **characterized in that** it further comprises nitrite ions (NO²⁻) at a concentration between 5 and 100 nmol.L⁻¹.

5. A solution according to one of the preceding claims, **characterized in that** the pH is between 7.2 and 7.6, preferably equal to 7.4.

6. A solution according to one of the preceding claims, **characterized in that** it further comprises an impermeable anion, a sugar, a cell membrane stabilizer, a buffer solution and/or an energy source.

7. A solution according to one of the preceding claims, **characterized in that** it further comprises:
- raffinose at a concentration between 25 and 35 mmol.L⁻¹ and allopurinol at a concentration between 0.5 and 1.5 mmol.L⁻¹; or
- mannitol at a concentration between 40 and 80 mmol.L⁻¹, advantageously mannitol at a concentration between 40 and 80 mmol.L⁻¹ and histidine at a concentration between 25 and 35 mmol.L⁻¹.

8. A solution according to one of the preceding claims, **characterized in that** it further comprises:
- lactobionic acid at a concentration between 80 and 120 mmol.L⁻¹;
- sulphate ions (SO₄²⁻), preferably provided by magnesium sulphate (MgSO₄), at a concentration between 4 and 6 mmol.L⁻¹;
- phosphate ions (PO₄³⁻), preferably provided by potassium phosphate (KH₂PO₄), at a concentration between 20 and 30 mmol.L⁻¹; and
- adenosine at a concentration between 4 and 6 mmol.L⁻¹.

9. A solution according to one of the preceding claims, **characterized in that** it comprises:
- PEG 35000 at a concentration of 5 g.L⁻¹;
- glutathione at a concentration of 9 mmol.L⁻¹;
- Zn²⁺ ions at a concentration of 0.191 mmol.L⁻¹;
- NO²⁻ ions at a concentration of 50 nmol.L⁻¹;
- raffinose at a concentration of 30 mmol.L⁻¹;
- lactobionic acid at a concentration of 100 mmol.L⁻¹;
- SO₄²⁻ ions, preferably provided by MgSO₄, at a concentration of 5 mmol.L⁻¹;
- PO₄³⁻ ions, preferably provided by KH₂PO₄, at a concentration of 25 mmol.L⁻¹;
- adenosine at a concentration of 5 mmol.L⁻¹;
- allopurinol at a concentration of 1 mmol.L⁻¹.

10. A solution according to one of the claims 1 to 8, **characterized in that** it comprises:
- PEG 35000 at a concentration of 5 g.L⁻¹;
- glutathione at a concentration of 9 mmol.L⁻¹;
- Zn²⁺ ions at a concentration of 0.191 mmol.L⁻¹;
- NO²⁻ ions at a concentration of 50 nmol.L⁻¹;
- mannitol at a concentration of 60 mmol.L⁻¹;
- lactobionic acid at a concentration of 100 mmol.L⁻¹;
- SO₄²⁻ ions, preferably provided by MgSO₄, at a concentration of 5 mmol.L⁻¹;
- PO₄³⁻ ions, preferably provided by KH₂PO₄, at a concentration of 25 mmol.L⁻¹;
- adenosine at a concentration of 5 mmol.L⁻¹.

11. A solution according to one of the claims 1 to 8, **characterized in that** it comprises:
- PEG 35000 at a concentration of 5 g.L⁻¹;
- glutathione at a concentration of 9 mmol.L⁻¹;
- Zn²⁺ ions at a concentration of 0.191 mmol.L⁻¹;
- NO²⁻ ions at a concentration of 50 nmol.L⁻¹;
- mannitol at a concentration of 60 mmol.L⁻¹;
- histidine at a concentration of 30 mmol.L⁻¹;
- lactobionic acid at a concentration of 100 mmol.L⁻¹;
- SO₄²⁻ ions, preferably provided by MgSO₄, at a concentration of 5 mmol.L⁻¹;
- PO₄³⁻ ions, preferably provided by KH₂PO₄, at a concentration of 25 mmol.L⁻¹;
- adenosine at a concentration of 5 mmol.L⁻¹.

12. Use of a solution according to one of claims 1 to 10 for the static preservation of organs to be transplanted.

13. Use of a solution according to one of claims 1 to 10 for the dynamic preservation of organs to be transplanted.

14. Use of a solution according to one of claims 1 to 10 for rinsing an organ to be transplanted.

15. Use according to one of claims 12 to 14, **characterized in that** the organ to be transplanted is an abdominal organ, preferably the liver, pancreas, kidney or intestines.
